Europäisches Patentamt

European Patent Office

Office européen des brevets

(11) Publication number: **0 165 214**
A2

# (12) EUROPEAN PATENT APPLICATION

(21) Application number: 85830139.3

(22) Date of filing: 06.06.85

(51) Int. Cl.⁴: **B 60 G 3/28**
B 60 G 11/18, B 60 G 15/06

(30) Priority: 12.06.84 IT 6760284

(43) Date of publication of application:
18.12.85 Bulletin 85/51

(84) Designated Contracting States:
DE FR GB SE

(71) Applicant: CORINT S.r.l.
Strada degli Alberoni 18/2
I-10133 Torino(IT)

(72) Inventor: Cordiano, Ettore
Strada degli Alberoni 18/2
I-10133 Torino(IT)

(74) Representative: Notaro, Giancarlo et al,
c/o Jacobacci-Casetta & Perani S.p.A. Via Alfieri, 17
I-10121 Torino(IT)

(54) Independent wheel suspension for rear driven wheels of motor-vehicles.

(57) In a rear suspension assembly with independent and driving wheels of the kind with telescopic strut (1) secured transversally by the axle shaft (9) and be steering system type tie rods (12), the elastic springing elements and the longitudinal anchorage arm consist of transversal (19, 21) and longitudinal (18, 20) sections of one or more torsion blades.

FIG. 1

EP 0 165 214 A2

./...

FIG. 2

- 1 -

Independent wheel suspension for rear driven wheels of motor-vehicles

---

The present invention relates to a rear suspension with independent and driving wheels of the type comprising , for each wheel:

A telescopic strut consisting of a shock absorber whose bottom end is clamped to the hub which carries the bearing of the wheel pin and whose stem is hinged to the vehicle body;

A substantially longitudinal arm; hinged to the bottom end of the telescopic strut and holding longitudinally this bottom end of the strut;

An axle connected, by either universal or constant velocity joints, on one end to the wheel hub on the other end to a planetary gear of a differential reduction unit, said axle shaft, having the function of transmitting the drive power from said differential to the wheel and to anchor transversally the strut and the wheel;

A transversal tie rod, of the steering system tie rod type, substantially parallel to the said axle shaft, whose function is to keep the wheel parallel to the vehicle longitudinal axis in springing motions;

Springing resilient means interposed between the suspension system and the vehicle body.

Suspensions of this type are known, with springs set on the longitudinal anchorage arm of the strut of directly on the strut itself. They offer the important advantage of permitting toe-in variations in the wheel in its motions by simply varying t h e height of the steering tie rod hinge point on the wheel or on the axle, and thus to optimize the behaviour of the suspension from the point of view of road holding of the vehicle in a bend or on a straight road without impairing its comfort characteristics.

Another advantage of this type of suspensions is that of reducing the weight of the unsprung masses since the same drive shaft is utilized to control the wheel, and this should be present anyway to transmit the power to the wheel. Also, the joints on the axle shafts, universal joints in place of sliding constant velocity joints - required by other types of similar suspensions designed with standard wishbone arrangements as a guide to the lower strut - are lighter and cheaper. On the other hand, since the wheel axis remains always substantially parallel to the output axis of the differential unit, arranging on the same plane the forks of the axle shaft end joints results in a pair of joints equivalent to a constant velocity joint , that is a transmission ratio which is constant throughout one revolution. The loads transmitted to the joint pins as an effect of lateral forces acting on the wheel in a bend are clearly smaller than the loads transmitted to the same pins by the transmitted torques and, moreover, they work on planes which are perpendicular to the latter planes, and thus they can be borne by the pin bearings without any damage. The disadvantages of this type of suspensions are represented by the size of the helical springs, whether they are set on the longitudinal anchorage arms or directly on the shock absorber, and by some complexity in the body structure required in the area of helical attachment. Object of this invention is to further improve this type of suspen sions, by eliminating the drawbacks mentioned above and, at the same time, by reducing the dimensions of the mechanical parts and increasing the space available for the fuel tank.

This object is reached through the invention, in that said substantially longitudinal arm and said resilient means are represented by one or more blades for each wheel, the blades being bent in two sections substantially perpendicular to one another , of which one section is set in a substantially longitudinal direction and the other in a substantially transversal direction, the longi
tudinal section being hinged to the strut at one end and having
the function of longitudinally anchoring the strut itself and of
transmitting, under form of twisting moment, the vertical reactions
of the road against the wheel to said transversal section of the bla
de or blades, said transversal section acting in this way as tor-
sion bar springing medium of the suspension. Other features and advantages offered by this invention will become obvious from the fol
lowing description referred, by way of example, to a practical implementation design as illustrated in the attached figures,of which:
Fig. 1 is a plan view of the suspension for one wheel, according
to the invention with two blades for each wheel;
Fig. 2 is a side view of the same suspension;
Fig. 3 is a rear view of the same suspension;
Fig. 4 is a detail of the attachment support of the blade ends;
Fig. 5 is a section of the same support;
Fig. 6 is a detail of the blade elastic mounting;
Fig. 7 is a detail of one type of hinged arrangement of blades to
strut;
Fig. 8 is a variant to Fig. 1 with one blade shorter than the other.

In all the above figures the common elements are indicated by
the same reference numbers. In the figures, all the suspensions
represented have two blades for each wheel, but all the considerations which are made below apply to single blade suspensions as
well.

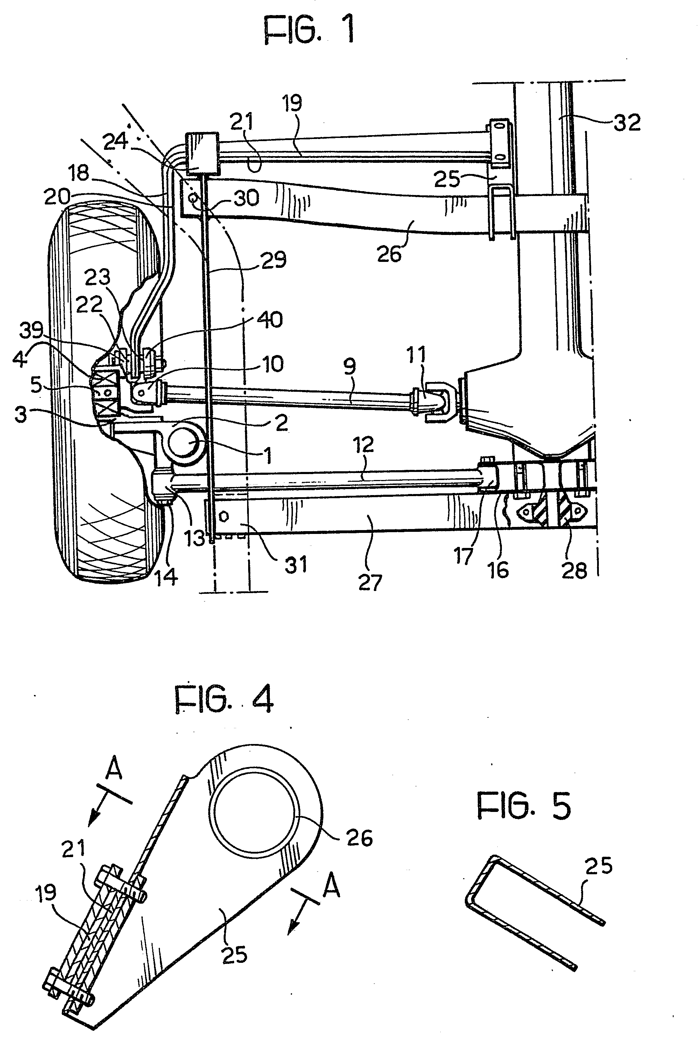

With reference to Figs. 1, 2 and 3, number 1 indicates a hydraulic shock absorber which is equipped on its lower end with a
flange 2 connected, by means of bolts 6, to hub 3 carrying the
bearing 4 of the wheel pin 5. The shock absorber stem 7 is attached
by means of a rubber pad 8 to the vehicle body. The assembly, made up by shock absorber 1, flange 2 and hub 3, represents the telesco pic strut of the suspension. This is anchored to the vehicle through :

The axle shaft 9, provided on its outer end with joint 10 which connects it to wheel pin 5 and, on the inner end, to a diffe rential planetary gear;

The rubber pad 8 which connects the shock absorber stem 7 to the vehicle body; the rubber pad 8 anchors the shock absorber stem in all directions;

The steering tie rod 12 connected to the telescopic strut through the bushing 13, whose pin 14 is attached to the strut, and to the external box 15 of the reduction unit through the intermediate element 16, by means of the bushing 17; the steering tie rod 12 maintains the wheel substantially parallel to the longitudinal plane of the vehicle and is generally adjustable in length to enable wheel toe-in to be adjusted during assembly;

The longitudinal sections 18 and 20 of the two torsion blades, hinged to the strut by means of the two bushings 22 and 23; these blade sections 18 and 20 anchor the strut longitudinally and transmit the vertical loads to the transversal sections 19 and 21 respectively. These latter sections 19 and 21 are supported in a rotating manner by the outer support 24 and their inner ends are clamped in the inner support 25, and under these conditions they act as torsion elements for the vehicle springing.

It is obvious that the supports 24 and 25 could be attached directly to the body, providing this with an adequate structure; similarly , the reduction unit could be carried by elastic supports directly attached to the body structure. In Figs. 1, 2 and 3, however, it is assumed that both the blades and the differential unit supports are attached to an auxiliary frame consisting of :

A front transversal member 26, which can be a circular section pipe, as seen in the figure, or a rectangular section beam, adequately deformed in the central area, if necessary, to admit the passage of a drive shaft; this transversal member 26 has the supports 24 and 25 attached to it and must be dimensioned in such a way that it can . withstand the torque transmitted by the blades to the inner support 25;

A rear transversal member 27 to which the elastic mounting 28 of the differential unit is attached;

Two side brackets 29 on which the transversal members 26 and 27 are welded.

Since both the reduction unit and the longitudinal sections of the blades are attached to the frame through elastic elements with large thickness and consequently well-insulating rubber pads, the frame itself can be rigidly attached to the vehicle body , without interposing any other elastic elements, and still obtaining an excellent insulation of the body from the stresses transmitted by the wheels and the reduction unit. With this arrangement ' the auxiliary frame contributes considerably to increase to vehicle body stiffness, especially torsionwise, and consequently it permits to simplify and lighten the body structures and thus to compensate for the additional weight of the auxiliary frame itself. Obviously these conditions do not change if the reduction unit is supported by the auxiliary frame only on the rear, while in front it is connected directly to the transmission through a rigid structure attached to the reduction unit housing. Figs. 1, 2 and 3 represent this type of arrangement, in which the rigid attachment structure consists of pipe 32 attached with a flange to the reduction unit housing and connected (connection not shown in the figures) to the powerplant assembly. The drive shafts runs inside pipe 32.

In the same figures 1, 2 and 3 the frame is assumed to be attached to the body in two points on each side of the vehicle , that is, point 30 and point 31 between the transversal members 26 and 27 and the external side member 49 represented in the drawing by the dot-dash line.

With this arrangement the vertical loads on the wheel are distributed between the attachment points 30 and 31 in amounts in versely proportional to their distance from the wheel centerline, while the longitudinal loads bear directly on attachment point 30.

The transversal loads instead are transmitted to attachment points 30 and 31 in various ways depending on the type of supports used for the reduction unit. If the reduction unit is completely supported by the frame, the transversal loads are distributed between attachment points 30 and 31 in amounts inversely proportional to their distances from the wheel centerline; if instead an arrangement of the type shown in the figure is used, then the transversal loads bear practically on attachment point 31 alone.

Fig. 4 is a section of support 25 welded to the transversal member 26 and on which the inner ends of the blades 19 and 21 are fixed. Fig. 5 is a section of the same support according to AA.

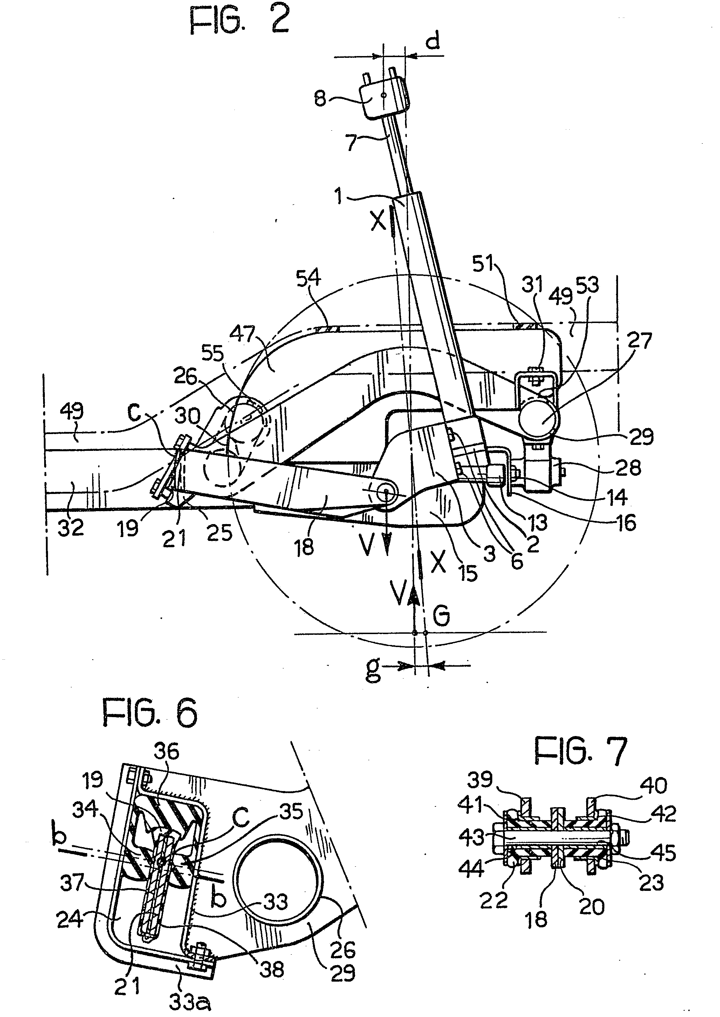

Fig. 6 is an alternative design of the external elastic support 24 of the blade. An external reinforcement 33 is welded to the side bracket 29 of the frame and contains in its inside a rubber support represented by the three pads 34,35 and 36. The two blades are held together, one against the other, with a rubber or antifriction plate 37 interposed in between, by a plastic band 38 which serves to the purpose of keeping the blades together during transportation and of creating a sufficiently large surface between the two blades and pad 36. Pads 34 and 35 are pre-loaded by reinforcement 33a and thus both absorb the longitudinal loads transmitted to the blades during acceleration and braking. Pad 36 bears the vertical load V transmitted to the wheel by the longitudinal section 18 and 20 of the blades.

During the springing motions of the wheels, the transversal section of the blades, in the area of elastic support 24, rotates around a center C which is midway between the lower face of pad 36 and the bb centerline of pads 34 and 35, and near the bb point. In the event of blades with high sections, in order to avoid excessive cutting deformations of pad 36, and thus to avoid the necessity of increasing the section height beyond given limits, it can be useful to shift the bb centerline of the pads from the blade centerline to a higher position, as indicated in Fig. 6. In this way the rotation center C of the blade is brought nearer to pad 36 and its shear deformations are reduced.

In the diagram of Fig.1 the longitudinal sections of the two blades are bent near the tyre and the hinging point on the strut is brought towards the outside. The purpose of the arrangement is to get the vertical thrust V (see Fig. 2) of the longitudinal section as near as possible to the wheel centerline plane, on which the vertical reaction of the road against the wheel is acting , which is equal but opposed to V.

This reduces the radial thrust of the stem and piston of the shock absorber against the shock absorber strut. If it were possible to bring the hinge exactly on the wheel centerline plane,the thrusts would be nul, but this is generally not possible due to lack of space.

Fig. 7 shows in detail one design which is feasible and convenient for hinging the blades to the telescopic strut. Hub 3 is provided with perforated lugs 39 and 40 (see also Fig. 1) on which the external sleeves 41 and 42 of bushings 22 and 23 are fixed.

The blade ends 18 and 20 have a hole which receives the bolt 43 which secures to the two blades the inner spacers 44 and 45 of the bushings 22 and 23.

All the figures indicate the presence of two blades, but it has been stated from the beginning that the same considerations apply even in the case that a single blade is used. In the case of light vehicles it is almost always possible and economically convenient to use a single blade because it is possible to design a blade subject to light stresses even with limited height sections. For heavier vehicles, where the stresses on the blade could become a critical factor, it is more convenient to have two blades. This results in a very important advantage: in case one blade fails during driving, the telescopic strut of the suspension can still be controlled by the remaining blade. In this case the back end of the vehicle becomes lower and leans on the rubber buffer, thus monitoring the blade failure to the driver who would then take in time the necessary steps.

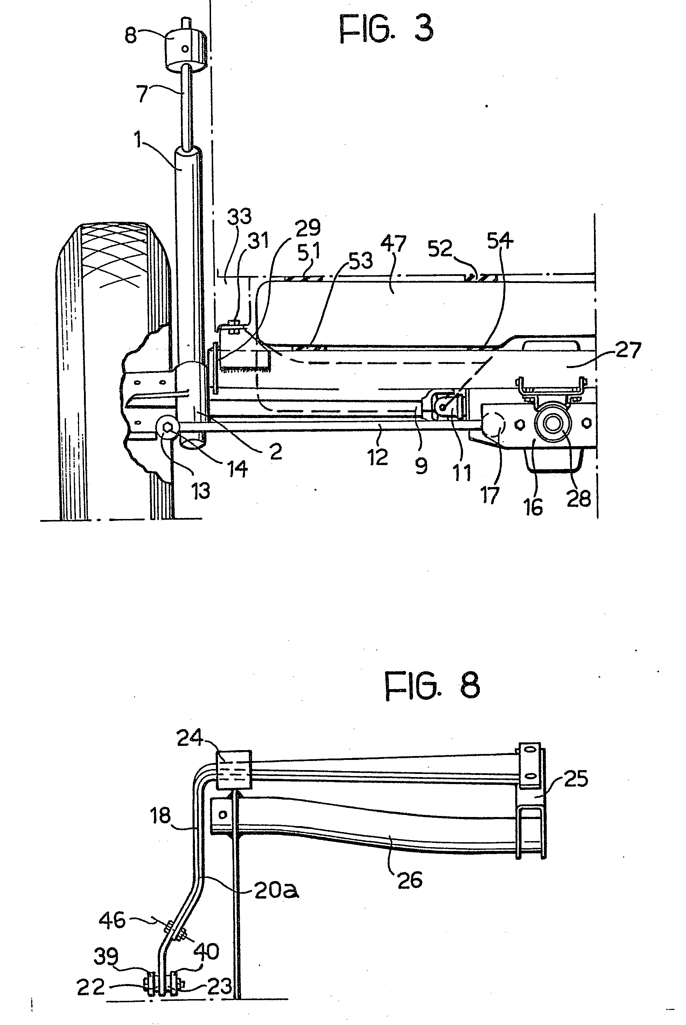

In order to achieve this safety precaution it is not necessary to have the two blades made of the same lenght and both hinged to the suspension strut. It is possible to attach one blade to the strut, while making the other blade shorter and attached to the longer blade with adequate fasteners, for instance, with a clamp or even one or more bolts set at appropriate distances from the transversal member. If the thicknesses of the two blades are chosen in such a way that the blade attached to the strut is sufficiently less stressed than the shorter blade, it will no doubt the latter that fails first, thus alerting the driver just as in the case of two blades of equal lenght. Fig. 8 represents one such design in which the shorter and thicker blade 20a is attached to the main blade 18, which is longer and thinner, with a single bolt 46.

Going back to Fig.s 2 and 3, it should be noted that the center of the attachment 8 of the shock absorber steml has been set in front of the vertical line passing through the wheel centerline, at- a distance d. The reason for this arrangement is the following: It is obvious that, if the tie rod 12 didn't exist, the wheel could be turning around on axix XX passing substantially through the said centerline and through the centerline of the universal joint 10, It is well known that in a bend the lateral reaction of the road on the wheel is shifted backwards with respect. to the center of the tyre print area. This creates a torque with respect to the strut rotation centerline; this torque is contrasted by the action of the tie rod 12 and tends to create a geometrical oversteering. If there are any yelding in the tie rod assembly, mainly due'to the elasticity of the bushing, this geometrical oversteering can reach such valuas asto jeopardize the vehicle road holding ability.

By shifting forward the center of attachment 8, the strut rotation centerline becomes inclined, the strut receives a negative camber angle and the intersection G of the same axis XX with the road is shifted backwards (distance g in Fig. 1). In this way it is possible to greatly reduce the torque of the lateral reaction which generates the geometrical oversteering and the torque could even be made to become negative, thus making the suspension geometrically understeering rather than oversteering.

From the same Figs. 2 and 3 it can be seen that yet another possibility is offered by the proposed suspension. First of all,the auxiliary frame configuration and the small dimensions of the suspension outside the reduction unit, the axle shafts and the tie rod assembly leave enough space for a considerably larger fuel tank. Moreover, the same auxiliary frame can be utilized to hold and to attach to the vehicle floor the fuel tank itself without the use of any additional specific securing devices.

The figures show a fuel tank 47, represented in section by broken lines, which rests on the transversal members 26 and 27 of the auxiliary frame. In these cases it may be useful to interpose between fuel tank, transversal members and vehicle floor such soft material paddings as represented by 51, 52, 53, 54 and 55 in order to avoid any springing during the assembly operations.

Obviously, the device has been described and illustrated accor ding to some selected implementation designs, but it will be apparent to design engineers that various changes in the shape and details can be made to the device without forsaking the spirit and the purpose of the invention.

0165214

- 11 -

CLAIMS:

1.      Rear suspension with independent and driving wheels for motor vehicle of the type including, for each wheel:

-       a telescopic strut consisting of shock absorber whose bottom end is clamped to the hub which carries the bearing of the wheel pin and whose stem is hinged to the vehicle body;

-       a substantially longitudinal arm, hinged to the bottom end of the telescopic strut and holding longitudinally this bottom end to the strut;

-       an axle connected, by either universal or constant velocity joints, on one end to the wheel hub and on the other end to a planetary gear of a differential reduction unit, said axle shaft having the function of transmitting the drive power from said differential to the wheel and to anchor transversally the strut and the wheel;

-       a transversal tie rod, of the steering system tie rod type, substantially parallel to the said axle shaft, whose function is to keep the wheel parallel to the vehicle longitudinal axis in springing motions;

-       springing resilient means interposed between the suspension system and the vehicle body,

characterized in that said substantially longitudinal arm and said resilient means are represented by one or more blades for each wheel the blades being bent in two section substantially perpendicular to one another, of which one section is set in a substantially longitudinal direction and the other in a substantially transversal direction, the longitudinal section being hinged to the strut at one end and having the function of longitudinally anchoring the strut itself and of transmitting, in form of twisting moment, the verti cal reactions of the road against the wheel to said transversal section of the blade or blades, said transversal section acting this way as torsion bar springing medium of the suspension.

2. Suspension with independent and driving wheels for motor vehicles according to claim 1, characterized in that the substantially longitudinal section of the blade or blades for each wheel is configured in such a way that it carries the strut attachment hinge as near as possible to the wheel centerline plane.

3. Rear suspension with independent and driving wheels for motor vehicles according to either claim 1 or claim 2 in which the two blades are designed for each wheel, characterized in that a single blade is hinged to the shock absorber strut, while the other, shorter than the first one, is attached to the first blade at an intermediate point between the strut attachment hinge and the transversal section of the blade by means of a clamp or of one or more bolts.

4. Rear suspension with independent and driving wheels for motor vehicles according to either claim 1 or claim 2 in which the two blades are designed for each wheel, characterized in that both blades are hinged to the shock absorber strut.

5. Suspension according to any one of claims 1 to 4, characterized in that the strut attachment hinges of the blades longitudinal sections are represented by two rubber bushings, supported by appropriate strut lugs, whose inner spacers are pressed against the blade or blades of the longitudinal section by means of a bolt passing through a hole in the blade ot blades.

6. Suspension according to any one of claims 1 to 5 in which two blades are designed for each wheel, characterized in that a rubber plate or an anti-friction material plate is interposed between the two blades at a point corresponding to the side elastic support in which the blades rotate.

7.     Suspension according to any one of claims 1 to 6 in which the external rubber supports in which the blades rotate are represented by two pre-loaded horizontal axis pads which anchor longitudinally the blade or blades, and by one vertical axis pad which bears the vertical load transmitted by the blade or blades, characterized in that the centerline of said pads is set higher than half the height of the blade sections and therefore nearer to the vertical pad, so that the reaction center of the blade is shifted upwards and thus the cutting deformations of the vertical pad are reduced.

8.     Suspension according to any one of claims 1 to 7, characterized in that the center of the upper attachment of the strut to the vehicle body is shifted in front of the vertical line passing through the wheel centerline so as to give a negative inclination (camber angle) to the rotation axis of the strut itself.

9.     Suspension according to any one of claims 1 to 8 in which the blades of the two wheels and the differential unit are assembled on an auxiliary frame consisting of:   a) a front transversal member which carries in its center area one or two supports to which are attached the ends of the transversal blade sections and the elastic supports of the blades for each wheel are attached to the side ends; b) a rear transversal member; and c) two side brackets which connect to each other said two  transversal members, the complete auxiliary frame being attached to the vehicle body rigidly or by means of insulating elastic elements, characterized in that the front transversal member consists in a constant section boxed stamping capable of supporting the torques transmitted by the blades and is shaped in a  way as to allow, in cooperation with the center blade attachment support or supports, the passage of a drive shaft between the engine and the reduction differential unit, the control tie rods of the two shock absorber struts being hinged directly to the reduction unit housing without intermediate elastic elements.

10. Suspension according to claim 10, characterized in that the same auxiliary frame has the function of holding and securing to the vehicle the fuel tank, which is shaped in such a way as to be pressed by the same auxiliary frame against the vehicle floor, with or without soft material paddings being provided between fuel tank, auxiliary frame and vehicle floor.

0165214

1/3

FIG. 1

FIG. 4

FIG. 5

FIG. 2

FIG. 6

FIG. 7

# FIG. 3

# FIG. 8